# EUROPEAN PATENT SPECIFICATION

(11) **EP 3 276 766 B1**
(45) Date of publication and mention of the grant of the patent: **24.11.2021**
(21) Application number: 16181005.6
(22) Date of filing: 25.07.2016
(51) Int. Cl.: H02H 7/26, H02H 3/00, G06F 15/177

(54) **SYSTEM, METHOD AND A COMPUTER PROGRAM PRODUCT FOR CONFIGURING A PROTECTION SYSTEM OF A POWER NETWORK**
SYSTEM, VERFAHREN UND COMPUTERPROGRAMMPRODUKT ZUR KONFIGURATION EINES SCHUTZSYSTEMS EINES STROMNETZES
SYSTÈME, PROCÉDÉ ET PRODUIT DE PROGRAMME INFORMATIQUE PERMETTANT DE CONFIGURER UN SYSTÈME DE PROTECTION D'UN RÉSEAU ÉLECTRIQUE

(43) Date of publication of application: 31.01.2018
(73) Proprietor: Siemens Aktiengesellschaft, 80333 München (DE)
(72) Inventor: Baumgärtel, Uwe, 13627 Berlin (DE); Meier, Martin, 91466 Gerhardshofen (DE); Behera, Jitendra, 560036 Bangalore (IN); G, Vijaya Bhaskara Reddy, 560068 Bangalore (IN); N, Sangeetha, 560103 Bangalore, Karnataka (IN); Wolz, Alexander, 90571 Schwaig (DE)
(74) Representative: Patentanwaltskanzlei WILHELM & BECK

(56) References cited:
- WO-A1-2015/158359
- WO-A2-2005/043712
- US-A1- 2004 130 837
- US-A1- 2004 130 838
- US-A1- 2008 201 020
- US-B1- 6 347 027

## Description

The present invention relates to protection systems in power networks, and more particularly to distributed busbar protection systems. Furthermore, the present invention relates to a method, a protection configuration system, and a computer program product for configuring a protection system of a power network.

A conventional distributed power network typically comprises a central zone including one or more busbars connected to multiple bay zones, each bay zone comprising one or more feeders, couplers, sectionalizers, etc., and various types of power network equipment, for example, transformers, disconnectors, circuit breakers, etc. A protection system for such a distributed power network typically comprises at least one protection unit for the central zone such as a busbar protection unit, which is in connection with protection units in each of the bay zones. In order to configure such a distributed busbar protection system, each of the protection units in the central zone and the respective bay zones are typically configured manually for communication therebetween and for taking corrective actions on occurrences of faults in the power networks. The protection system configuration is typically performed by manually entering into the protection units, data associated with other protection units and data associated with power network equipment in each of the bay zones that is connection with the respective protection units.

Conventional methods and systems for configuring a protection system of a distributed power network, known to a person skilled in the art, are typically non-scalable in terms of flexibility to accommodate large number of bay zones and changes that occur in power network equipment in the bay zones, thereby leading to increased power network commissioning efforts. Moreover, the configuration in such methods and systems is typically performed manually by importing power network equipment data, and assigning the data to respective protection units. This manual configuration is not only tedious and time consuming but typically results in errors associated with incorrect assignment of data thereby leading to erroneous actions taken during occurrences of faults in the power network, for example, incorrect tripping of circuit breakers.

US6347027B1 discloses a method and a system for configuring a protection system of a power network in service, wherein algorithms for using and coordinating information conveyed over communications are employed to dynamically modify protection characteristics of distribution devices to enhance overall protection and reconfigurability of the distribution system.

WO2015/158359A1 discloses a dynamic configuration of intelligent electronic devices such as protection devices ,herein sections comprising protection devices are identified.

Further prior art is disclosed by WO2005/043712A2, US2004/130838A1, US 2008/201020 Al and US2004/130837A1.

Therefore, it is an object of the present invention to provide a method and system of the aforementioned kind that can automatically and accurately configure a protection system of a power network with flexibility to accommodate changes to the power network.

The method and system according to the present invention achieve the aforementioned object by identifying one or more sections of the power network, generating one or more clusters of network elements from the sections based on predefined clustering parameters, and dynamically configuring each protection unit from each section using parameterization data of the network elements from the corresponding clusters.

According to the present invention, a method for configuring a protection system of a power network is provided. As used herein, "protection system" refers to one or more power network protection equipment in operable connection with one another, configured to isolate a part of the power network where fault is detected, for ensuring a continuous power supply and precluding damages in the power network. The power network protection equipment comprises, for example, circuit breakers, relays, disconnectors, switchgears, etc., for providing different types protection such as line protection, transformer protection, busbar protection, etc. The method, according to the present invention, comprises identifying one or more sections of the power network. The sections comprise a primary section and one or more secondary sections. Each of the secondary sections is in connection with the primary section. The primary section comprises, for example, a central busbar zone and the secondary sections comprise, for example, bay zones or line feeder zones in connection with the central busbar zone. Each of the sections comprises at least one protection unit and one or more network elements. As used herein, "protection unit" refers to the power network protection equipment such as power relays for protection of busbars, transformers, couplers, line feeders, etc. The network elements comprise, for example, line feeders, disconnectors, current transformers, voltage transformers, power transformers, circuit breakers, etc. In a preferred embodiment, according to the present invention, the protection unit of primary section comprises at least one busbar protection unit and the protection units of each secondary section comprise one or more of a line protection unit, a distance protection unit, and a transformer protection unit.

The method, according to the present invention, generates one or more clusters of the network elements based on predefined clustering parameters. As used herein, the term "clusters" refers to groups of the network elements, each group comprising at least one network element. The predefined clustering parameters are defined based on a topology of the power network. For example, based on a position of a current transformer with respect to other network elements in a section of the power network, the clusters include network elements along the line feeders towards busbar central zone or away from the busbar central zone with the current transformer as point of reference. In a preferred embodiment, according to the present invention, the clusters comprise network elements in connection with at least one of the protection units.

In a preferred embodiment, according to the present invention, generation of clusters comprises validating each of the clusters based on element types of the network elements, section types of the sections, and one or more predefined validation parameters. For example, based on a position of the transformer and the circuit breaker in the power network, their element types are line transformer and line circuit breaker respectively. Similarly, based on network topology of the power network, the section types comprise, for example, a feeder bay, a coupler bay, a sectionalizer bay, etc. The predefined validation parameters comprise multiple rules for connection of the network elements. The predefined validation parameters comprise, for example, a single current transformer is to be connected in a path from a busbar to a feeder, a single circuit breaker is to be connected in a path from a busbar to a feeder, a single line disconnector is to be connected in a path from a busbar to a feeder, a coupler bay comprises at least one current transformer, a single load breaking switch is connected in a coupler bay, etc. This preferred embodiment, according to the present invention, precludes faulty configuration of protection system by avoiding configuration of the protection units using data associated with network elements that are erroneously connected in the power network. In another embodiment, according to the present invention, the method comprises generating an error notification when the validation of one or more of the clusters fails. The error notification comprises an indication for modification of one or more of the network elements of the power network. For example, the error notification indicates one or more reasons of invalidity and one or more solutions for generation of a valid cluster.

In an embodiment, according to the present invention, the method determines sections that are identical in terms of the network elements and connections therebetween, by comparing each of the sections of the power network. In this embodiment, the method generates clusters and validates the generated cluster for one of the identical sections and replicates the same for remaining of these sections to decrease processing overheads involved in configuration of the protection system. In another embodiment, according to the present invention, the method determines identical clusters and validates one of the identical clusters for decreasing the processing overheads.

The method, according to the present invention, dynamically configures each protection unit using parameterization data of one or more of the network elements from one or more of the clusters. The parameterization data comprises one or more parameters associated with connections, communication, and operation of one or more of the network elements and one or more of the protection units. For example, the parameterization data of a busbar protection unit for the primary section, comprises, for example, voltage ratings, current ratings, etc., of the network elements and one or more communication protocols, for example, IC61850 using which the busbar protection unit can communicate with the protection units from the secondary sections. In an embodiment, according to the present invention, this parameterization data is maintained in a parameterization file. In another embodiment, the parameterization data is categorized based on the secondary sections in connection with the primary section. For example, the parameterization data is maintained in form of a list comprising data of the network elements, per cluster, per secondary section. In a preferred embodiment, the method, according to the present invention, configures communication between each protection unit. This communication enables the protection units to take actions, for example, tripping, isolating a section, etc., on receiving an indication from other protection unit such as the busbar protection unit via the configured communication. In this embodiment, the communication between the protection units, comprises a wired and/or a wireless communication.

According to the present invention, also disclosed herein is a protection configuration system for configuring protection system of a power network. The protection configuration system comprises a non-transitory computer readable storage medium storing computer program instructions defined by modules of the protection configuration system and at least one processor communicatively coupled to the non-transitory computer readable storage medium, executing the defined computer program instructions. The modules of the protection configuration system comprise a section identification module, a cluster generation module, and a protection configuration module. The section identification module is configured to identify one or more sections of the power network. The cluster generation module is configured to generate one or more clusters of the network elements based on predefined clustering parameters. The protection configuration module is configured to dynamically configure each protection unit using parameterization data of one or more of the network elements from one or more of the clusters. In an embodiment according to the present invention, the method disclosed herein employs the protection configuration system comprising at least one processor configured to execute computer program instructions for configuring the protection system of the power network.

According to the present invention, also disclosed herein, is a computer program product comprising a non-transitory computer readable storage medium storing computer program codes that comprise instructions executable by at least one processor for performing the method disclosed above for configuring protection system of a power network.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a process flowchart illustrating a method for configuring a protection system of a power network.
- FIG 2: illustrates a protection configuration system for configuring a protection system of a power network.
- FIG 3: is a block diagram illustrating architecture of a computer system employed by the protection configuration system illustrated in FIG 2 for configuring a protection system of a power network.
- FIGS 4A-4G: illustrate screenshots of a graphical user interface provided by the protection configuration system for configuring a protection system of a power network.

Various embodiments are described with reference to the drawings, wherein like reference numerals are used to refer to like elements throughout. In the following description, for the purpose of explanation, numerous specific details are set forth in order to provide thorough understanding of one or more embodiments of the present invention. It may be evident that such embodiments may be practiced without these specific details.

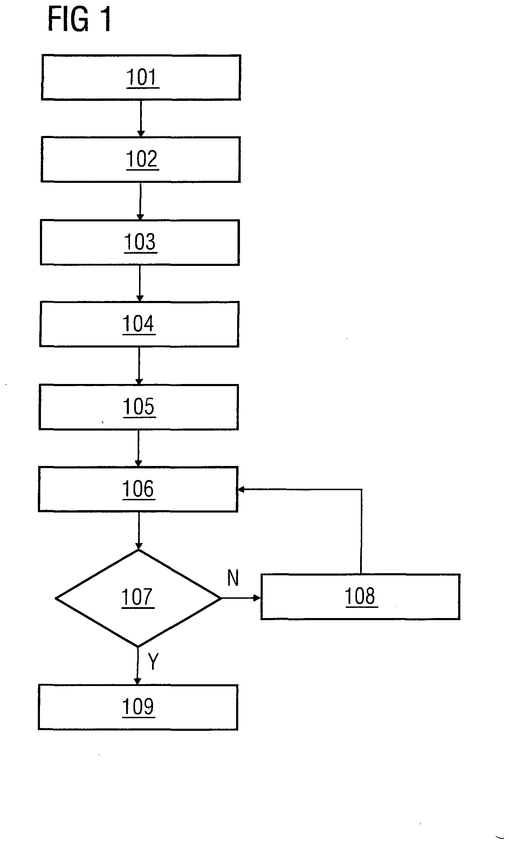

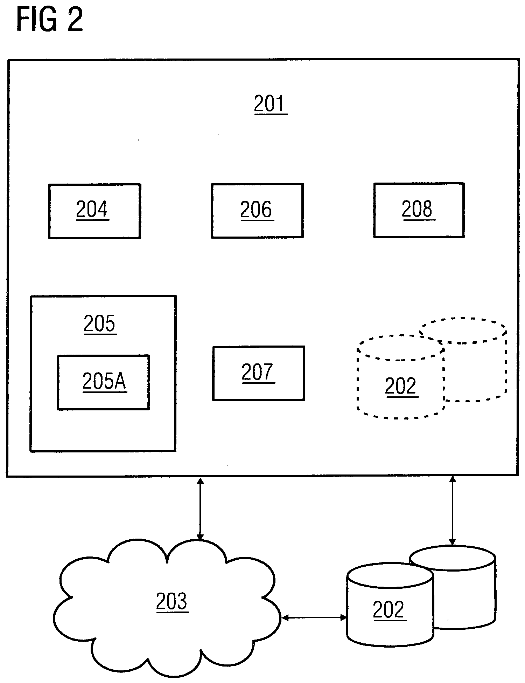

FIG 1 is a process flowchart illustrating a method for configuring a protection system of a power network. The method disclosed herein employs a protection configuration system illustrated in FIG 2, comprising at least one processor configured to execute computer program instructions for configuring a protection system of a power network. The protection configuration system receives 101 a representation of the power network. The power network is, for example, a distributed power network. The representation comprises, for example, a single line diagram of the power network. This single line diagram comprises multiple graphical objects defining various network elements of the power network such as busbars, circuit breakers, transformers, etc. In an embodiment, the protection configuration system imports the single line diagram from a power network database comprising multiple representations of various power networks in various geographical locations. In another embodiment, the protection configuration system receives the single line diagram as an input from a user via a graphical user interface, for example, via power network editor software used by the user to draw and configure the single line diagram. The single line diagram is in a format comprising, for example, extensible markup language (XML), hyper text markup language (HTML), etc. In an embodiment, the protection configuration system verifies quality of the received single line diagram, for example, by performing a connectivity check of various network elements in the power network to one another.

The protection configuration system connects 102 protection units into the power network, for example, by appending graphical objects representing various types of protection units comprising, for example, a busbar protection unit, a transformer protection unit, a line protection unit, etc., into the single line diagram of the power network. The protection configuration system performs this connection of the protection units based on historical data including, for example, methods or topologies of connection of various protection units to the power network. This historical data comprises, for example, one or more topologies for connection of a particular type of protection unit such as a busbar protection unit to a particular part of the power network such as a central busbar zone. In an embodiment, the protection configuration system receives a user input for connection of protection units into the power network. In another embodiment, the protection system provides suggestions of connection of the protection units into the power network, based on the historical data, to the user prior to receiving the user input. The protection configuration system connects the protection units to each other, for example, by connecting the protection unit in the central busbar zone of a distributed power network to each of the protection units in the bay zones of the distributed power network. The protection configuration system also connects the protection units to various network elements of the power network, for example, a busbar protection unit is connected to the busbars of the power network.

The protection configuration system identifies 103 one or more sections of the power network. Each of the sections comprises at least one protection unit and one or more network elements. The protection configuration system traverses the single line diagram using connections between the network elements and based on the topology of the power network, identifies sections of the power network. The identified sections comprise a primary section and one or more secondary sections. Each of the secondary sections is in connection with the primary section. For example, for a distributed power network, the protection configuration system identifies a central busbar zone as the primary section and multiple bay zones as the secondary sections. In an embodiment, the protection configuration system identifies the sections based on the protection units connected into the power network. For example, if a busbar protection unit is connected into a section of the power network then the protection configuration system identifies this section to be a primary section. The protection unit of the primary section comprises at least one busbar protection unit and the protection unit of each of the secondary sections comprises, for example, a line protection unit, a distance protection unit, and/or a transformer protection unit.

In a preferred embodiment, the protection configuration system reconstructs 104 the single line diagram by filtering the network elements that are not connected to any of the protection units. This reconstruction enables the protection configuration system in decreasing processing overhead. When the protection configuration system uses the original single line diagram without any reconstruction, the protection configuration system thereby requires to process data associated with each of the network elements whether connected or not connected to the protection units. However, a configured protection unit typically would comprise data associated with those network elements that are in connection with this protection unit. The protection configuration system designates 105 each of the network elements of the reconstructed single line diagram with an element type and each of the sections of the reconstructed single line diagram with a section type by traversing the single line diagram. For this designation, the protection configuration system determines element types based on the positions of the network elements in the power network. For example, when a current transformer (CT) is positioned in a line feeder, the element type for this network element is a line CT. The protection configuration system determines section types based on topology of the sections in the power network, for example, for a section comprising a disconnector, a circuit breaker, and a transformer the section type is a feeder bay section, for a section comprising busbars coupled with a power coupler the section type is a coupler bay section, etc.

The protection configuration system generates 106 one or more clusters of the network elements based on predefined clustering parameters. The protection configuration system defines predefined clustering parameters based on a topology of the power network. For example, using a position of a current transformer in a bay zone of the power network as a reference, the protection configuration system generates a first cluster comprising network elements in the bay zone that are positioned between the current transformer and the busbar zone and a second cluster comprising network elements in the bay zone that are positioned between the current transformer and the load end of the bay zone. The protection configuration system validates 107 each of the clusters based on the element types of the network elements, the section types of sections, and one or more predefined validation parameters. The validation parameters comprise multiple rules for connection of the network elements. For example, for a current transformer having an element type as line current transformer, the validation parameter specifies that two or more line current transformers are unallowable in along the line feeder. Similarly, for a section having a coupler bay section type, the validation parameter specifies that the coupler bay section is to have at least one current transformer. The protection configuration system generates 108 an error notification when the validation of one or more clusters fails. The error notification comprises an indication for modification of one or more network elements of the power network. The protection configuration system renders the error notification on the user device. In an embodiment, the protection configuration system generates and renders error notifications for each of the clusters validated, together on the user device.

The protection configuration system dynamically configures 109 each protection unit using parameterization data of one or more of the network elements from one or more of the clusters. The parameterization data comprises one or more parameters associated with connections, communication, and operation of the network elements and one or more protection units. The protection configuration system also configures communication between each protection unit. During configuration of the protection units, for example, of the busbar protection unit from the primary section, that is, the busbar central zone, the protection configuration system instantiates the busbar protection unit, assigns the instantiated busbar protection unit with a corresponding number of protection units in each of the secondary sections, that is, bay zones, that are in connection with the primary section, and assigns the corresponding network elements in each of the clusters to respective protection units in the instantiated busbar protection unit. The protection configuration system instantiates communication modules in each of the protection units for facilitating communication between the protection units when there is an occurrence of fault.

FIG 2 illustrates a protection configuration system 201 for configuring a protection system of a power network. In a preferred embodiment, according to the present invention, the protection system comprises a distributed busbar protection system. In this embodiment, according to the present invention, the distributed protection system comprises at least one busbar protection unit for a central busbar zone, in connection with each of one or more protection units for the bay zones. The protection configuration system 201, according to the present invention, is installed on and accessible by a user device, for example, a personal computing device, a workstation, a client device, a network enabled computing device, any other suitable computing equipment, and combinations of multiple pieces of computing equipment. The protection configuration system 201 disclosed herein is in operable communication with a power network database 202. In an embodiment the protection configuration system 201 communicates with the power network database 202 over a communication network 203. The power network database 202 is, for example, a structured query language (SQL) data store or a not only SQL (NoSQL) data store. In an embodiment of the power network database 202, according to the present invention, can also be a location on a file system directly accessible by the protection configuration system 201. In another embodiment of the power network database 202, according to the present invention, is configured as cloud based database implemented in a cloud computing environment, where computing resources are delivered as a service over the communication network 203. As used herein, "cloud computing environment" refers to a processing environment comprising configurable computing physical and logical resources, for example, networks, servers, storage, applications, services, etc., and data distributed over the communication network 203, for example, the internet. The cloud computing environment provides on-demand network access to a shared pool of the configurable computing physical and logical resources. The communication network 203 is, for example, a wired network, a wireless network, a communication network, or a network formed from any combination of these networks.

In a preferred embodiment, according to the present invention, the protection configuration system 201 is downloadable and usable on the user device. In another embodiment according to the present invention, the protection configuration system 201 is configured as a web based platform, for example, a website hosted on a server or a network of servers. In another embodiment according to the present invention, the protection configuration system 201 is implemented in the cloud computing environment. The protection configuration system 201 is developed, for example, using Google App engine cloud infrastructure of Google Inc., Amazon Web Services^{®} of Amazon Technologies, Inc., the Amazon elastic compute cloud EC2^{®} web service of Amazon Technologies, Inc., the Google^{®} Cloud platform of Google Inc., the Microsoft^{®} Cloud platform of Microsoft Corporation, etc. In an embodiment, the protection configuration system 201 is configured as a cloud computing based platform implemented as a service for analyzing data.

The protection configuration system 201 disclosed herein comprises a non-transitory computer readable storage medium and at least one processor communicatively coupled to the non-transitory computer readable storage medium. As used herein, "non-transitory computer readable storage medium" refers to all computer readable media, for example, non-volatile media, volatile media, and transmission media except for a transitory, propagating signal. The non-transitory computer readable storage medium is configured to store computer program instructions defined by modules, for example, 204, 205, 206, 207, etc., of the protection configuration system 201. The processor is configured to execute the defined computer program instructions. As illustrated in FIG 2, the protection configuration system 201 comprises a graphical user interface (GUI) 208. A user using the user device can access the protection configuration system 201 via the GUI 208. The GUI 208 is, for example, an online web interface, a web based downloadable application interface such as Microsoft^{®} Windows^{®} application, etc. The protection configuration system 201 further comprises a section identification module 204, a cluster generation module 205, an error generation module 206, and a protection configuration module 207.

The section identification module 204 identifies one or more sections of the power network. Each of the sections comprises at least one protection unit and one or more network elements. The cluster generation module 205 generates one or more clusters of the network elements based on predefined clustering parameters. In a preferred embodiment, according to the present invention, the cluster generation module 205 comprises a cluster validation module 205A that validates each of the clusters based on element types of the network elements, section types of the sections, and one or more predefined validation parameters. In this embodiment, according to the present invention, the protection configuration system 201 comprises an error generation module 206 that generates an error notification when the validation of one or more of the clusters fails. The error notification comprises an indication for modification of one or more of the network elements of the power network. In another embodiment, according to the present invention, the error generation module 206 generates one or more error notifications when a user accessing the protection configuration system 201, performs one or more incorrect actions comprising, for example, deletion of one or more network elements while the cluster generation module 205 is generating clusters and/or the cluster validation module 205A is validating clusters, etc., that is, when the user attempts to modify the power network when the protection configuration system 201 is performing one or more steps towards configuring the protection system. The protection configuration module 207 dynamically configures each protection unit using parameterization data of one or more of the network elements from one or more of the clusters. The protection configuration module 207 also configures communication between each protection unit, which enables the protection system to take corrective actions such as isolation of a section of the power network during occurrences of faults in the power network.

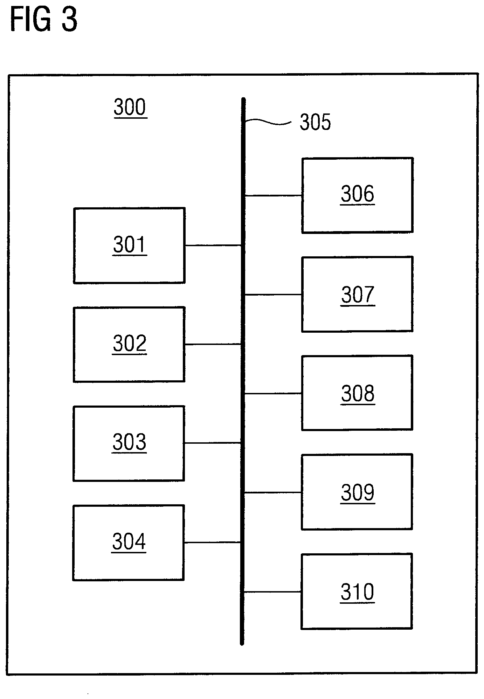

FIG 3 is a block diagram illustrating architecture of a computer system 300 employed by the protection configuration system 201 illustrated in FIG 2, for configuring a protection system of a power network. The protection configuration system 201 employs the architecture of the computer system 300 illustrated in FIG 3. The computer system 300 is programmable using a high level computer programming language. The computer system 300 may be implemented using programmed and purposeful hardware. As illustrated in FIG 3, the computer system 300 comprises a processor 301, a non-transitory computer readable storage medium such as a memory unit 302 for storing programs and data, an input/output (I/O) controller 303, a network interface 304, a data bus 305, a display unit 306, input devices 307, a fixed media drive 308 such as a hard drive, a removable media drive 309 for receiving removable media, output devices 310, etc. The processor 301 refers to any one of microprocessors, central processing unit (CPU) devices, finite state machines, microcontrollers, digital signal processors, an application specific integrated circuit (ASIC), a field-programmable gate array (FPGA), etc., or any combination thereof, capable of executing computer programs or a series of commands, instructions, or state transitions. The processor 301 may also be implemented as a processor set comprising, for example, a general purpose microprocessor and a math or graphics coprocessor. The processor 301 is selected, for example, from the Intel^{®} processors, Advanced Micro Devices (AMD^{®}) processors, International Business Machines (IBM^{®}) processors, etc. The protection configuration system 201 disclosed herein is not limited to a computer system 300 employing a processor 301. The computer system 300 may also employ a controller or a microcontroller. The processor 301 executes the modules, for example, 204, 205, 206, 207, etc., of the protection configuration system 201.

The memory unit 302 is used for storing programs, applications, and data. For example, the section identification module 204, the cluster generation module 205, the error generation module 206, the protection configuration module 207, etc., of the protection configuration system 201 are stored in the memory unit 302 of the computer system 300. The memory unit 302 is, for example, a random access memory (RAM) or another type of dynamic storage device that stores information and instructions for execution by the processor 301. The memory unit 302 also stores temporary variables and other intermediate information used during execution of the instructions by the processor 301. The computer system 300 further comprises a read only memory (ROM) or another type of static storage device that stores static information and instructions for the processor 301. The I/O controller 303 controls input actions and output actions performed by the protection configuration system 201.

The network interface 304 enables connection of the computer system 300 to the communication network 203. For example, the protection configuration system 201 connects to the communication network 203 via the network interface 304. In an embodiment, the network interface 304 is provided as an interface card also referred to as a line card. The network interface 304 comprises, for example, interfaces using serial protocols, interfaces using parallel protocols, and Ethernet communication interfaces, interfaces based on wireless communications technology such as satellite technology, radio frequency (RF) technology, near field communication, etc. The data bus 305 permits communications between the modules, for example, 204, 205, 206, 207, 208, etc., of protection configuration system 201.

The display unit 306, via the graphical user interface (GUI) 208, displays information such as a single line diagram of the power network, user interface elements such as text fields, buttons, windows, etc., for allowing a user to provide his/her inputs such as the protection units for each of the sections of the power network, etc. The display unit 306 comprises, for example, a liquid crystal display, a plasma display, an organic light emitting diode (OLED) based display, etc. The input devices 307 are used for inputting data into the computer system 300. The input devices 307 are, for example, a keyboard such as an alphanumeric keyboard, a touch sensitive display device, and/or any device capable of sensing a tactile input.

Computer applications and programs are used for operating the computer system 300. The programs are loaded onto the fixed media drive 308 and into the memory unit 302 of the computer system 300 via the removable media drive 309. In an embodiment, the computer applications and programs may be loaded directly via the communication network 203. Computer applications and programs are executed by double clicking a related icon displayed on the display unit 306 using one of the input devices 307. The output devices 310 output the results of operations performed by the protection configuration system 201. For example, the protection configuration system 201 provides graphical representation of the configured protection units, using the output devices 310. The graphical representation comprises, for example, a pull down menu for each of the configured protection units comprising respective network elements and the parameterization data associated with each of these network elements.

The processor 301 executes an operating system, for example, the Linux^{®} operating system, the Unix^{®} operating system, any version of the Microsoft^{®} Windows^{®} operating system, the Mac OS of Apple Inc., the IBM^{®} OS/2, etc. The computer system 300 employs the operating system for performing multiple tasks. The operating system is responsible for management and coordination of activities and sharing of resources of the computer system 300. The operating system further manages security of the computer system 300, peripheral devices connected to the computer system 300, and network connections. The operating system employed on the computer system 300 recognizes, for example, inputs provided by the users using one of the input devices 307, the output display, files, and directories stored locally on the fixed media drive 308. The operating system on the computer system 300 executes different programs using the processor 301. The processor 301 and the operating system together define a computer platform for which application programs in high level programming languages are written.

The processor 301 of the computer system 300 employed by the protection configuration system 201 retrieves instructions defined by the section identification module 204, the cluster generation module 205, the error generation module 206, the protection configuration module 207, etc., of the protection configuration system 201 for performing respective functions disclosed in the detailed description of FIG 2. The processor 301 retrieves instructions for executing the modules, for example, 204, 205, 206, 207, etc., of the protection configuration system 201 from the memory unit 302. A program counter determines the location of the instructions in the memory unit 302. The program counter stores a number that identifies the current position in the program of each of the modules, for example, 204, 205, 206, 207, etc., of the protection configuration system 201. The instructions fetched by the processor 301 from the memory unit 302 after being processed are decoded. The instructions are stored in an instruction register in the processor 301. After processing and decoding, the processor 301 executes the instructions, thereby performing one or more processes defined by those instructions.

At the time of execution, the instructions stored in the instruction register are examined to determine the operations to be performed. The processor 301 then performs the specified operations. The operations comprise arithmetic operations and logic operations. The operating system performs multiple routines for performing a number of tasks required to assign the input devices 307, the output devices 310, and memory for execution of the modules, for example, 204, 205, 206, 207, etc., of the protection configuration system 201. The tasks performed by the operating system comprise, for example, assigning memory to the modules, for example, 204, 205, 206, 207, etc., of the protection configuration system 201, and to data used by the protection configuration system 201, moving data between the memory unit 302 and disk units, and handling input/output operations. The operating system performs the tasks on request by the operations and after performing the tasks, the operating system transfers the execution control back to the processor 301. The processor 301 continues the execution to obtain one or more outputs. The outputs of the execution of the modules, for example, 204, 205, 206, 207, etc., of the protection configuration system 201 are displayed to the user on the GUI 208.

For purposes of illustration, the detailed description refers to the protection configuration system 201 being run locally on the computer system 300; however the scope of the present invention is not limited to the protection configuration system 201 being run locally on the computer system 300 via the operating system and the processor 301, but may be extended to run remotely over the communication network 203 by employing a web browser and a remote server, a mobile phone, or other electronic devices. One or more portions of the computer system 300 may be distributed across one or more computer systems (not shown) coupled to the communication network 203.

Disclosed herein is also a computer program product comprising a non-transitory computer readable storage medium that stores computer program codes comprising instructions executable by at least one processor 301 for configuring a protection system of a power network, as disclosed in the present invention. The computer program product comprises a first computer program code for identifying one or more sections of a power network; a second computer program code for generating one or more clusters of the network elements based on predefined clustering parameters; and a third computer program code for dynamically configuring each protection unit using parameterization data of one or more of the network elements from one or more of the clusters.

In an embodiment, a single piece of computer program code comprising computer executable instructions performs one or more steps of the method according to the present invention, for configuring a protection system of a power network. The computer program codes comprising computer executable instructions are embodied on the non-transitory computer readable storage medium. The processor 301 of the computer system 300 retrieves these computer executable instructions and executes them. When the computer executable instructions are executed by the processor 301, the computer executable instructions cause the processor 301 to perform the steps of the method for configuring a protection system of a power network.

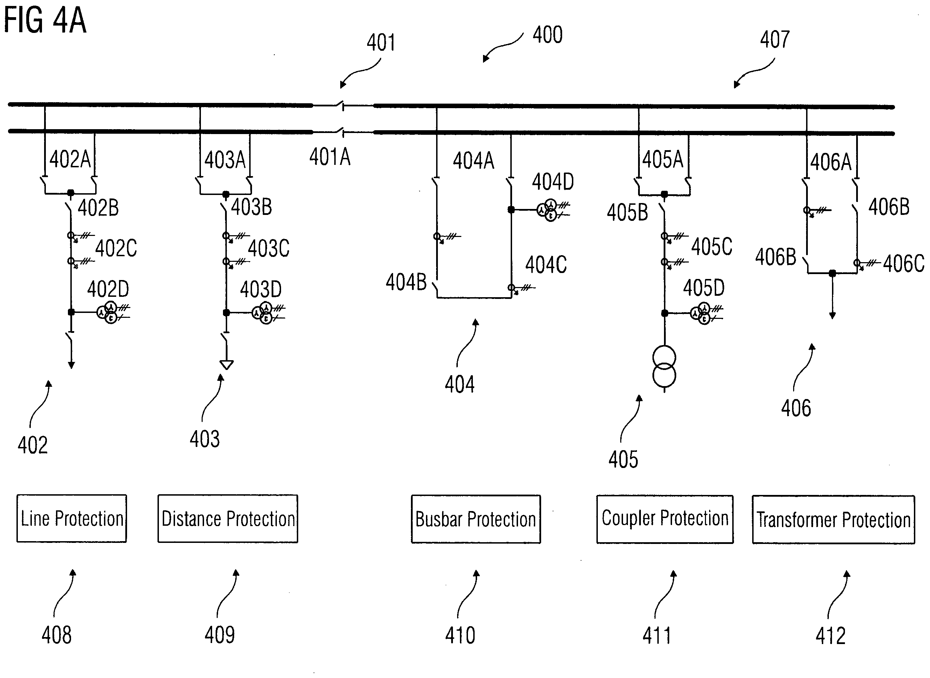

FIGS 4A-4G illustrate screenshots of a graphical user interface (GUI) 208 provided by the protection configuration system 201, as disclosed in the detailed description of FIG 2, for configuring a protection system of a power network 400. Consider an example, where a user using the protection configuration system 201 illustrated in FIG 2, imports a single line diagram of a power network 400 exemplarily illustrated in FIG 4A. The protection configuration system 201 identifies sections 401, 402, 403, 404, 405, 406 and 407 of the power network 400. The section 407 is a primary section representing a central busbar zone and the secondary sections 401, 402, 403, 404, 405, and 406 each represent bay zones of the power network 400. Each of the sections 401-407 comprise multiple network elements such as one or more disconnectors 401A, 402A, 403A, 404A, 405A, and 406A, one or more circuit breakers 402B, 403B, 404B, 405B, and 406B, one or more current transformers 402C, 403C, 404C, 405C, and 406C, one or more voltage transformers 402D, 403D, and 404D, etc., exemplarily illustrated in FIG 4A. The protection configuration system 201 displays the single line diagram of the power network 400 to the user with options to connect one or more protection units such as a line protection unit 408, a distance protection unit 409, a busbar protection unit 410, a coupler protection unit 411, and a transformer protection unit 412, in one or more sections 401-407 of the power network 400. In a preferred embodiment, the protection configuration system 201 enables the user to logically generate and/or logically modify, for example, rename, the protection units 408-412 based on the type of protection required.

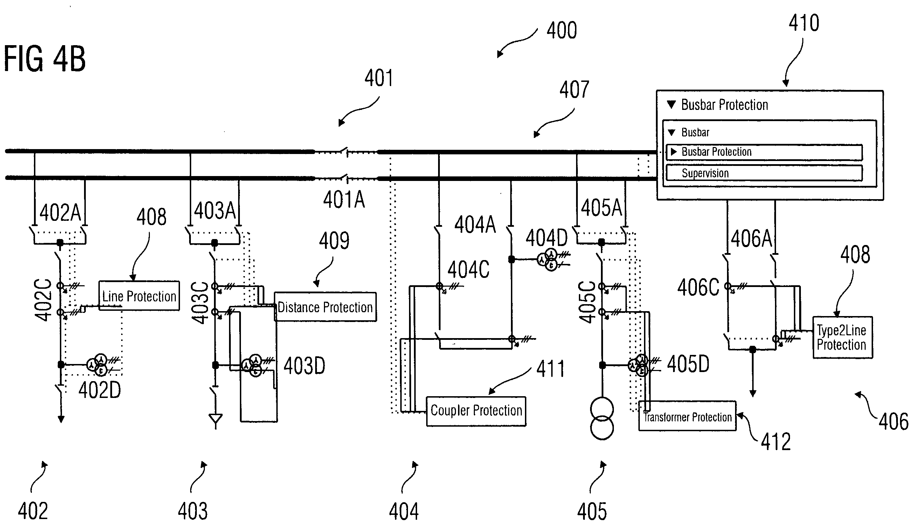

The user connects the protection units 408-412 in multiple sections 401-407 of the power network 400, as exemplarily illustrated in FIG 4B. In an embodiment, the protection configuration system 201 connects the protection units 408-412 in the sections 401-407 of the power network 400 based on historical data of configuration of the protection systems and displays the power network 400 illustrated in FIG 4B to the user. As shown in FIG 4B, connection of the protection units 408-412 into the power network 400, includes connection of each protection unit 408-412 to one or more of the network elements 401A, 402A-402D, 403A-403D, 404A-404D, 405A-405C, and 406A-406D, and connection of each of the protection units 408, 409, 411, and 412 in the secondary sections 401, 402, 403, 404, 405, and 406 to the protection unit 410 in the primary section 407.

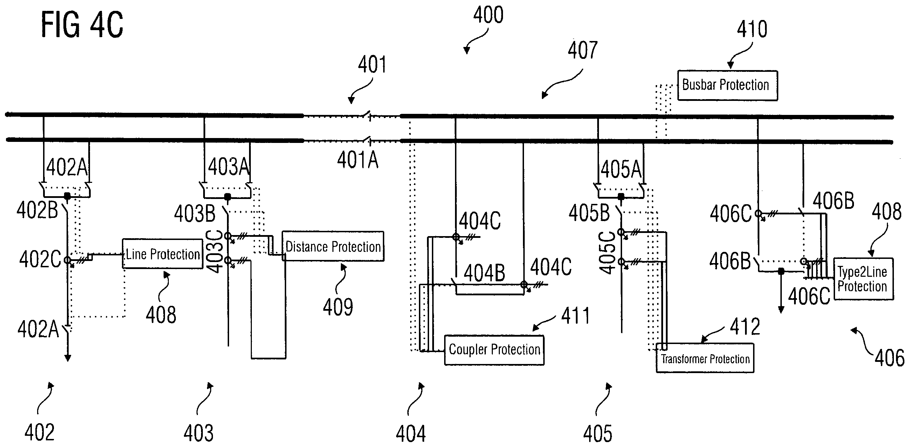

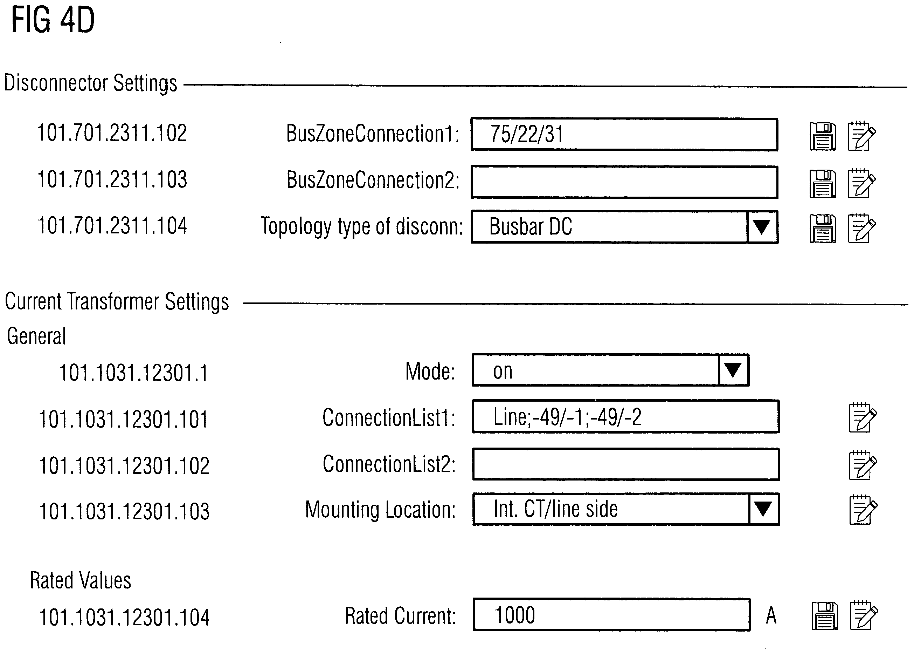

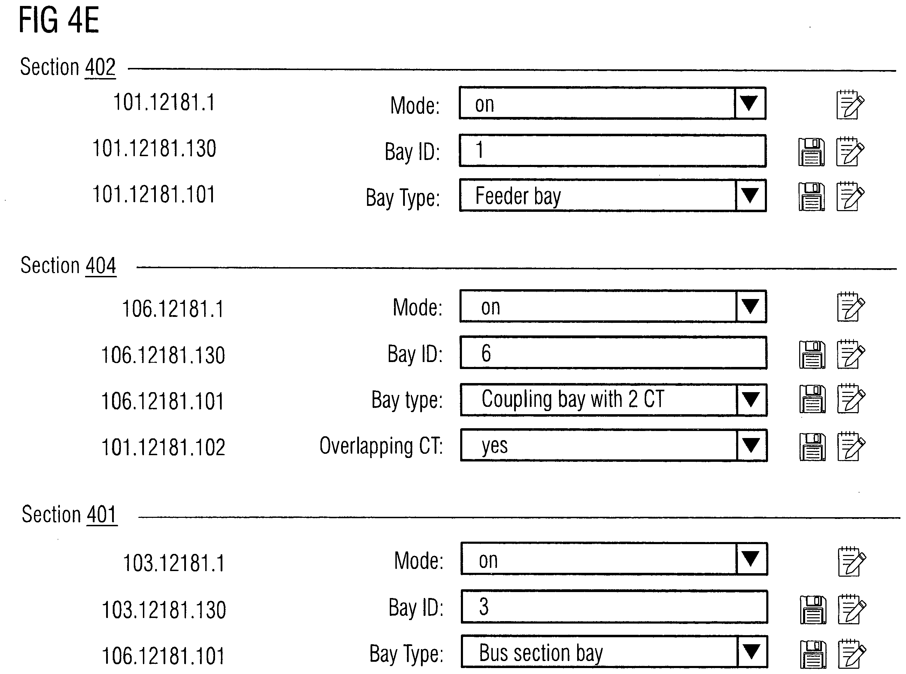

The protection configuration system 201 generates an auxiliary single line diagram of the power network 400, exemplarily illustrated in FIG 4C, comprising the network elements 401A, 402A-402D, 403A-403D, 404A-404D, 405A-405C, and 406A-406D that are connected to at least one of the protection units 408-412. For example, the section 402 from auxiliary single line diagram comprises network elements 402A, 402B, and 402C in connection with the protection unit 408. The protection configuration system 201 designates each of the network elements 401A, 402A-402D, 403A-403D, 404A-404D, 405A-405C, and 406A-406D and the sections 401-407 with an element type and a section type respectively by traversing the auxiliary single line diagram of the power network 400. For example, the protection configuration system 201 traverses section 402 and designates the current transformer 402C as line current transformer based on position of the current transformer in the feeder, as exemplarily illustrated in FIG 4D. Similarly, the protection configuration system 201 designates the sections 401, 402, and 404 as bus sectionalizer bay, feeder bay, and coupler bay respectively based on the topology of the power network 400, as exemplarily illustrated in FIG 4E.

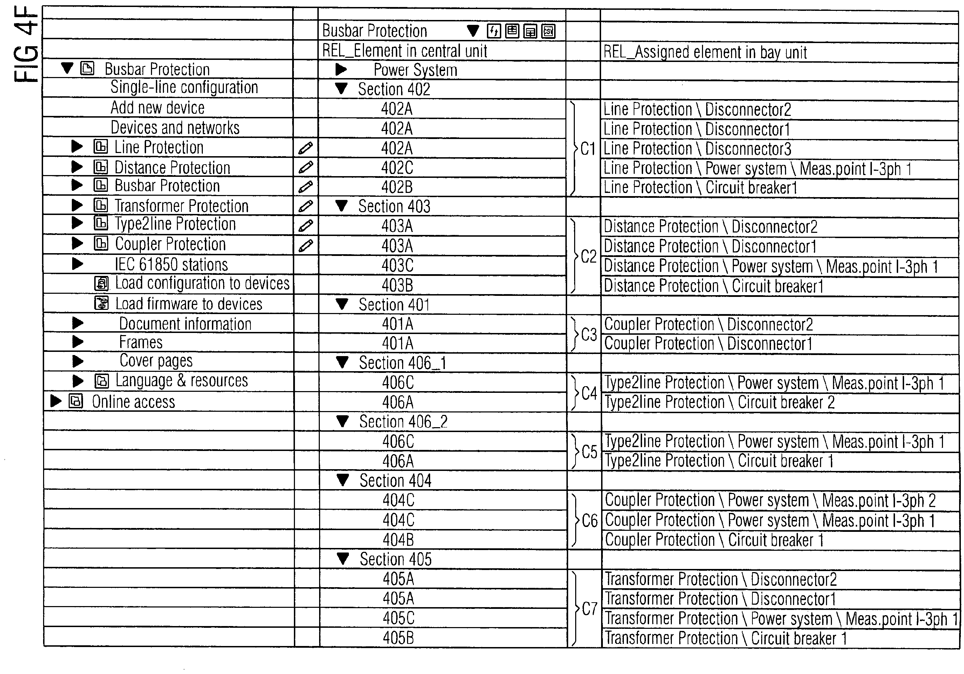

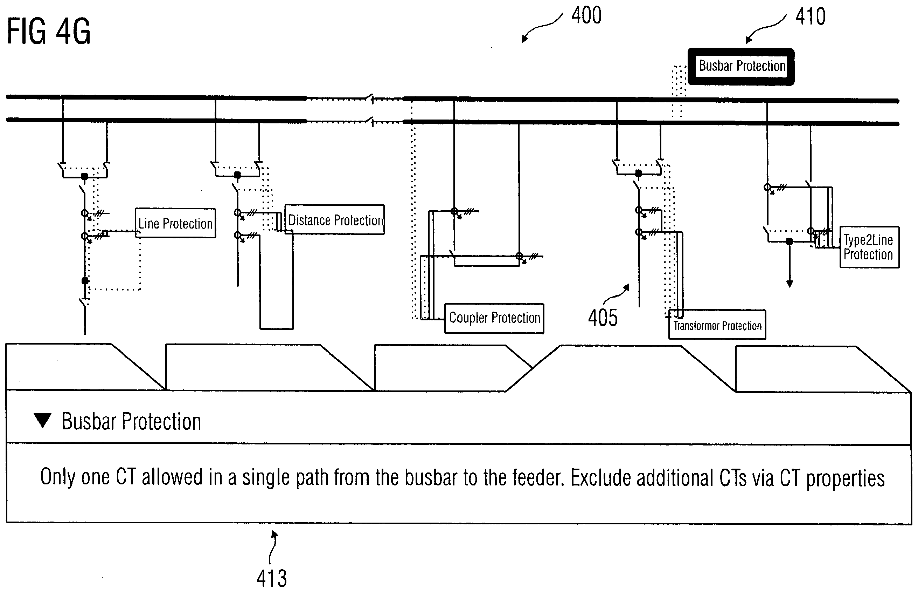

The protection configuration system 201 generates clusters C1, C2, C3, C4, C5, C6, and C7 from the network elements 401A, 402A-402D, 403A-403D, 404A-404D, 405A-405C, and 406A-406D using the auxiliary single line diagram, as exemplarily illustrated in FIG 4F. While generating clusters C1-C7, the protection configuration system 201 may combine network elements 401A, 402A-402D, 403A-403D, 404A-404D, 405A-405C, and 406A-406D from two or more sections 401-407 or may split the network elements 402A-402D, 403A-403D, 404A-404D, 405A-405C, or 406A-406D from the section 401, 402, 403, 404, 405, 406, or 407. For example, as exemplarily illustrated in FIG 4G, the protection configuration system 201 generates two clusters C4 and C5 by splitting the network elements 406C and 406B of the section 406 based on the topology of the power network 400, for example, when two feeders converge to form a single feeder, the network elements along each of the feeders can be split to form two clusters. The protection configuration system 201 validates each of the clusters C1-C7 and generates an error notification 413 when the validation fails, as exemplarily illustrated in FIG 4G. Since, the cluster C7 from section 405, comprises two line current transformers 405C along the line feeder, this cluster C7 fails in validation. Therefore, the protection configuration system generates an error notification 413 indicating the error that lead to validation failure. This error notification 413 may include highlighting of one or more of the network elements 401A, 402A-402D, 403A-403D, 404A-404D, 405A-405C, and 406A-406D that are erroneously connected, highlighting of the respective clusters C1-C7, highlighting of the corresponding protection unit 408-412, etc.

The protection configuration system 201, dynamically configures the protection units 408-412 using parameterization data of the network elements 401A, 402A-402D, 403A-403D, 404A-404D, 405A-405C, and 406A-406D from respective clusters C1-C7. A configured busbar protection unit 410 comprises, for example, data associated with each of the sections 401-407 classified based on the clusters C1-C7, as exemplarily illustrated in FIG 4F. The protection configuration system 201 maintains a parameterization file comprising data associated with the configuration of the protection system in the power network database 202, exemplarily illustrated in FIG 2.

It will be readily apparent that the various methods, algorithms, and computer programs disclosed herein may be implemented on computer readable media appropriately programmed for computing devices. As used herein, "computer readable media" refers to non-transitory computer readable media that participate in providing data, for example, instructions that may be read by a computer, a processor or a similar device. Non-transitory computer readable media comprise all computer readable media, for example, non-volatile media, volatile media, and transmission media, except for a transitory, propagating signal.

The computer programs that implement the methods and algorithms disclosed herein may be stored and transmitted using a variety of media, for example, the computer readable media in a number of manners. In an embodiment, hard-wired circuitry or custom hardware may be used in place of, or in combination with, software instructions for implementation of the processes of various embodiments. Therefore, the embodiments are not limited to any specific combination of hardware and software. In general, the computer program codes comprising computer executable instructions may be implemented in any programming language. The computer program codes or software programs may be stored on or in one or more mediums as object code. Various aspects of the method and system disclosed herein may be implemented in a non-programmed environment comprising documents created, for example, in a hypertext markup language (HTML), an extensible markup language (XML), or other format that render aspects of a graphical user interface (GUI) or perform other functions, when viewed in a visual area or a window of a browser program. Various aspects of the method and system disclosed herein may be implemented as programmed elements, or non-programmed elements, or any suitable combination thereof. The computer program product disclosed herein comprises one or more computer program codes for implementing the processes of various embodiments.

Where databases are described such as the power network database 202, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a database. In embodiments where there are multiple databases in the system, the databases may be integrated to communicate with each other for enabling simultaneous updates of data linked across the databases, when there are any updates to the data in one of the databases.

The present invention can be configured to work in a network environment comprising one or more computers that are in communication with one or more devices via a network. The computers may communicate with the devices directly or indirectly, via a wired medium or a wireless medium such as the Internet, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present invention is not limited to a particular computer system platform, processor, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims.

## Claims

1. A method for configuring a protection system of a power network (400), said method comprising:
identifying sections (401, 402, 403, 404, 405, 406, 407) of said power network (400) based on the topology of the power network, the sections comprising a primary section and one or more secondary sections, the primary section comprising a central busbar zone and the one or more secondary sections comprise bay zones, each secondary section being in connection with the primary section, wherein each section (401, 402, 403, 404, 405, 406, 407) comprises at least one protection unit (408, 409, 410, 411, 412) and one or more network elements (401A, 402A-402D, 403A-403D, 404A-404D, 405A-405C, 406A-406D), the protection unit of primary section comprises at least one busbar protection unit and the protection units of each secondary section comprise one or more of a line protection unit, a distance protection unit, and a transformer protection unit;
generating one or more clusters (C1, C2, C3, C4, C5, C6, C7) of said network elements (401A, 402A-402D, 403A-403D, 404A-404D, 405A-405C, 406A-406D) based on predefined clustering parameters, the predefined clustering parameters being based on a topology of the power network;
validating each of said clusters (C1, C2, C3, C4, C5, C6, C7) based on element types of said network elements (401A, 402A-402D, 403A-403D, 404A-404D, 405A-405C, 406A-406D), section types of said sections (401, 402, 403, 404, 405, 406, 407), and one or more predefined validation parameters, the one or more predefined validation parameters comprise a plurality of rules for connection of said network elements (401A, 402A-402D, 403A-403D, 404A-404D, 405A-405C, 406A-406D); and
dynamically configuring each said protection unit (408, 409, 410, 411, 412) using parameterization data of said one or more network elements (401A, 402A-402D, 403A-403D, 404A-404D, 405A-405C, 406A-406D) from said one or more clusters (C1, C2, C3, C4, C5, C6, C7), the parameterization data comprising one or more parameters associated with connections, communication, and operation of said one or more network elements (401A, 402A-402D, 403A-403D, 404A-404D, 405A-405C, 406A-406D) and one or more protection units (408, 409, 410, 411, 412), wherein the busbar protection unit of the primary section is assigned to a corresponding number of protection units in each secondary section, and wherein the corresponding network elements in each cluster are assigned to the respective protection units.

2. The method according to claim 1, further comprising generating an error notification (413) when said validation of said one or more clusters (C1, C2, C3, C4, C5, C6, C7) fails, wherein said error notification (413) comprises an indication for modification of said one or more network elements (401A, 402A-402D, 403A-403D, 404A-404D, 405A-405C, 406A-406D) of said power network (400).

3. The method according to claim 1 or 2, further comprising configuring communication between said each protection unit (408, 409, 410, 411, 412).

4. The method according to any of claims 1 to 3, further comprising receiving a representation of the power network (400) and connecting protection units (408, 409, 410, 411, 412) into the power network (400).

5. The method according to any of claims 1 to 4, further comprising filtering the network elements that are not connected to any of the protection units.

6. A protection configuration system (201) for configuring a protection system of a power network (400), said protection configuration system (201) comprising:
a non-transitory computer readable storage medium storing computer program instructions defined by modules of said protection configuration system (201);
at least one processor (301) communicatively coupled to said non-transitory computer readable storage medium, said at least one processor (301) executing said defined computer program instructions; and
said modules of said protection configuration system (201) comprising:
a section identification module (204) configured to identify sections (401, 402, 403, 404, 405, 406, 407) of said power network (400) based on the topology of the power network, the sections comprising a primary section and one or more secondary sections, the primary section comprising a central busbar zone and the one or more secondary sections comprise bay zones, each secondary section being in connection with the primary section,, wherein each section (401, 402, 403, 404, 405, 406, 407) comprises at least one protection unit (408, 409, 410, 411, 412) and one or more network elements (401A, 402A-402D, 403A-403D, 404A-404D, 405A-405C, 406A-406D), the protection unit of primary section comprises at least one busbar protection unit and the protection units of each secondary section comprise one or more of a line protection unit, a distance protection unit, and a transformer protection unit;
a cluster generation module (205) configured to generate one or more clusters (C1, C2, C3, C4, C5, C6, C7) of said network elements (401A, 402A-402D, 403A-403D, 404A-404D, 405A-405C, 406A-406D) based on predefined clustering parameters, the predefined clustering parameters being based on a topology of the power network;
a cluster validation module (205A) configured to validating each of said clusters (C1, C2, C3, C4, C5, C6, C7) based on element types of said network elements (401A, 402A-402D, 403A-403D, 404A-404D, 405A-405C, 406A-406D), section types of said sections (401, 402, 403, 404, 405, 406, 407), and one or more predefined validation parameters, the one or more predefined validation parameters comprise a plurality of rules for connection of said network elements (401A, 402A-402D, 403A-403D, 404A-404D, 405A-405C, 406A-406D); and
a protection configuration module (207) configured to dynamically configure each said protection unit (408, 409, 410, 411, 412) using parameterization data of said one or more network elements (401A, 402A-402D, 403A-403D, 404A-404D, 405A-405C, 406A-406D) from said one or more clusters (C1, C2, C3, C4, C5, C6, C7), the parameterization data comprising one or more parameters associated with connections, communication, and operation of said one or more network elements (401A, 402A-402D, 403A-403D, 404A-404D, 405A-405C, 406A-406D) and one or more protection units (408, 409, 410, 411, 412), wherein the busbar protection unit of the primary section is assigned to a corresponding number of protection units in each secondary section, and wherein the corresponding network elements in each cluster are assigned to the respective protection units.

7. The protection configuration system (201) according to claim 6, further comprising an error generation module (206) configured to generate an error notification (413) when said validation of said one or more clusters (C1, C2, C3, C4, C5, C6, C7) fails, wherein said error notification (413) comprises an indication for modification of said one or more network elements (401A, 402A-402D, 403A-403D, 404A-404D, 405A-405C, 406A-406D) of said power network (400).

8. The protection configuration system (201) according to claim 6 or 7, wherein said protection configuration module (207) is further configured to configure communication between said each protection unit (408, 409, 410, 411, 412).

9. The protection configuration system (201) according to any of claims 6 to 8, being configured to receive a representation of the power network (400) and connecting protection units (408, 409, 410, 411, 412) into the power network (400).

10. The protection configuration system according to any of claims 6 to 9, being configured to filter the network elements that are not connected to any of the protection units.

11. The protection configuration system (201) according to any of claims 6 to 10, wherein said protection system comprises a distributed busbar protection system.

12. A computer program product comprising a non-transitory computer readable storage medium, said non-transitory computer readable storage medium storing computer program codes that comprise instructions executable by at least one processor (301), said computer program codes being configured to carry out the method of any of claims 1 to 5.

## Patentansprüche

1. Verfahren zum Konfigurieren eines Schutzsystems eines Stromnetzes (400), wobei das Verfahren Folgendes umfasst: Identifizieren von Abschnitten (401, 402, 403, 404, 405, 406, 407) des Stromnetzes (400) auf der Grundlage der Topologie des Stromnetzes, wobei die Abschnitte einen Primärabschnitt und einen oder mehrere Sekundärabschnitte umfassen, der Primärabschnitt eine zentrale Sammelschienenzone umfasst und der eine oder die mehreren Sekundärabschnitte Buchtzonen umfassen, jeder Sekundärabschnitt mit dem Primärabschnitt in Verbindung ist, jeder Abschnitt (401, 402, 403, 404, 405, 406, 407) mindestens eine Schutzeinheit (408, 409, 410, 411, 412) und ein oder mehrere Netzelemente (401A, 402A-402D, 403A-403D, 404A-404D, 405A-405C, 406A-406D) umfasst, die Schutzeinheit des Primärabschnitts mindestens eine Sammelschienenschutzeinheit umfasst und die Schutzeinheiten jedes Sekundärabschnitts eine Leitungsschutzeinheit und/oder eine Entfernungsschutzeinheit und/oder eine Transformatorschutzeinheit umfassen;
Erzeugen eines oder mehrerer Cluster (C1, C2, C3, C4, C5, C6, C7) der Netzelemente (401A, 402A-402D, 403A-403D, 404A-404D, 405A-405C, 406A-406D) auf der Grundlage von im Voraus definierten Gruppierungsparametern, wobei die im Voraus definierten Gruppierungsparameter eine Topologie des Stromnetzes als Grundlage verwenden;
Prüfen jedes Clusters (C1, C2, C3, C4, C5, C6, C7) auf der Grundlage von Elementtypen der Netzelemente (401A, 402A-402D, 403A-403D, 404A-404D, 405A-405C, 406A-406D), Abschnitttypen der Abschnitte (401, 402, 403, 404, 405, 406, 407) und eines oder mehrerer im Voraus definierter Prüfparameter, wobei der eine oder die mehreren im Voraus definierten Prüfparameter mehrere Regeln zur Verbindung der Netzelemente (401A, 402A-402D, 403A-403D, 404A-404D, 405A-405C, 406A-406D) umfassen; und
dynamisches Konfigurieren jeder Schutzeinheit (408, 409, 410, 411, 412) unter Verwendung von Parametrisierungsdaten des einen oder der mehreren Netzelemente (401A, 402A-402D, 403A-403D, 404A-404D, 405A-405C, 406A-406D) des einen oder der mehreren Cluster (C1, C2, C3, C4, C5, C6, C7), wobei die Parametrisierungsdaten einen oder mehrere Parameter umfassen, die Verbindungen, Kommunikationen und einem Betrieb des einen oder der mehreren Netzelemente (401A, 402A-402D, 403A-403D, 404A-404D, 405A-405C, 406A-406D) und einer oder mehreren Schutzeinheiten (408, 409, 410, 411, 412) zugeordnet sind, die Sammelschienenschutzeinheit des Primärabschnitts einer entsprechenden Anzahl Schutzeinheiten in jedem Sekundärabschnitt zugewiesen ist und die entsprechenden Netzelemente in jedem Cluster den jeweiligen Schutzeinheiten zugewiesen sind.

2. Verfahren nach Anspruch 1, das ferner ein Erzeugen einer Fehlermitteilung (413), wenn die Gültigkeitsprüfung des einen oder der mehreren Cluster (C1, C2, C3, C4, C5, C6, C7) scheitert, umfasst, wobei die Fehlermitteilung (413) eine Angabe zur Änderung des einen oder der mehreren Netzelemente (401A, 402A-402D, 403A-403D, 404A-404D, 405A-405C, 406A-406D) des Stromnetzes (400) umfasst.

3. Verfahren nach Anspruch 1 oder 2, das ferner ein Konfigurieren einer Kommunikation zwischen den jeweiligen Schutzeinheiten (408, 409, 410, 411, 412) umfasst.

4. Verfahren nach einem der Ansprüche 1 bis 3, das ferner ein Empfangen einer Darstellung des Stromnetzes (400) und ein Verbinden von Schutzeinheiten (408, 409, 410, 411, 412) im Stromnetz (400) umfasst.

5. Verfahren nach einem der Ansprüche 1 bis 4, das ferner ein Filtern der Netzelemente, die nicht mit einer Schutzeinheit verbunden sind, umfasst.

6. Schutzkonfigurationssystem (201) zum Konfigurieren eines Schutzsystems eines Stromnetzes (400), wobei das Schutzkonfigurationssystem (201) Folgendes umfasst:
ein nicht transitorisches computerlesbares Speichermedium, in dem Computerprogrammbefehle gespeichert sind, die durch Module des Schutzkonfigurationssystems (201) definiert sind;
mindestens einen Prozessor (301), der an das nicht transitorische computerlesbare Speichermedium kommunikationstechnisch gekoppelt ist, wobei der mindestens eine Prozessor (301) die definierten Computerprogrammbefehle ausführt; und
die Module des Schutzkonfigurationssystems (201) Folgendes umfassen:
ein Abschnittidentifizierungsmodul (204), das konfiguriert ist zum Identifizieren von Abschnitten (401, 402, 403, 404, 405, 406, 407) des Stromnetzes (400) auf der Grundlage der Topologie des Stromnetzes, wobei die Abschnitte einen Primärabschnitt und einen oder mehrere Sekundärabschnitte umfassen, der Primärabschnitt eine zentrale Sammelschienenzone umfasst und der eine oder die mehreren Sekundärabschnitte Buchtzonen umfassen, jeder Sekundärabschnitt mit dem Primärabschnitt in Verbindung ist, jeder Abschnitt (401, 402, 403, 404, 405, 406, 407) mindestens eine Schutzeinheit (408, 409, 410, 411, 412) und ein oder mehrere Netzelemente (401A, 402A-402D, 403A-403D, 404A-404D, 405A-405C, 406A-406D) umfasst, die Schutzeinheit des Primärabschnitts mindestens eine Sammelschienenschutzeinheit umfasst und die Schutzeinheiten jedes Sekundärabschnitts eine Leitungsschutzeinheit und/oder eine Entfernungsschutzeinheit und/oder eine Transformatorschutzeinheit umfassen;
ein Cluster-Erzeugungsmodul (205), das konfiguriert ist zum Erzeugen eines oder mehrerer Cluster (C1, C2, C3, C4, C5, C6, C7) der Netzelemente (401A, 402A-402D, 403A-403D, 404A-404D, 405A-405C, 406A-406D) auf der Grundlage von im Voraus definierten Gruppierungsparametern, wobei die im Voraus definierten Gruppierungsparameter eine Topologie des Stromnetzes als Grundlage verwenden;
ein Clusterprüfmodul (205A), das konfiguriert ist zum Prüfen jedes Clusters (C1, C2, C3, C4, C5, C6, C7) auf der Grundlage von Elementtypen der Netzelemente (401A, 402A-402D, 403A-403D, 404A-404D, 405A-405C, 406A-406D), Abschnitttypen der Abschnitte (401, 402, 403, 404, 405, 406, 407) und eines oder mehrerer im Voraus definierter Prüfparameter, wobei der eine oder die mehreren im Voraus definierten Prüfparameter mehrere Regeln zur Verbindung der Netzelemente (401A, 402A-402D, 403A-403D, 404A-404D, 405A-405C, 406A-406D) umfassen; und
ein Schutzkonfigurationsmodul (207), das konfiguriert ist zum dynamischen Konfigurieren jeder Schutzeinheit (408, 409, 410, 411, 412) unter Verwendung von Parametrisierungsdaten des einen oder der mehreren Netzelemente (401A, 402A-402D, 403A-403D, 404A-404D, 405A-405C, 406A-406D) des einen oder der mehreren Cluster (C1, C2, C3, C4, C5, C6, C7), wobei die Parametrisierungsdaten einen oder mehrere Parameter umfassen,
die Verbindungen, Kommunikationen und einem Betrieb des einen oder der mehreren Netzelemente (401A, 402A-402D, 403A-403D, 404A-404D, 405A-405C, 406A-406D) und einer oder mehrerer Schutzeinheiten (408, 409, 410, 411, 412) zugeordnet sind, die Sammelschienenschutzeinheit des Primärabschnitts einer entsprechenden Anzahl Schutzeinheiten in jedem Sekundärabschnitt zugewiesen ist und die entsprechenden Netzelemente in jedem Cluster den jeweiligen Schutzeinheiten zugewiesen sind.

7. Schutzkonfigurationssystem (201) nach Anspruch 6, das ferner ein Fehlererzeugungsmodul (206) umfasst, das konfiguriert ist zum Erzeugen einer Fehlermitteilung (413), wenn die Gültigkeitsprüfung des einen oder der mehreren Cluster (C1, C2, C3, C4, C5, C6, C7) scheitert, wobei die Fehlermitteilung (413) eine Angabe zur Änderung des einen oder der mehreren Netzelemente (401A, 402A-402D, 403A-403D, 404A-404D, 405A-405C, 406A-406D) des Stromnetzes (400) umfasst.

8. Schutzkonfigurationssystem (201) nach Anspruch 6 oder 7, wobei das Schutzkonfigurationsmodul (207) ferner konfiguriert ist zum Konfigurieren einer Kommunikation zwischen den jeweiligen Schutzeinheiten (408, 409, 410, 411, 412).

9. Schutzkonfigurationssystem (201) nach einem der Ansprüche 6 bis 8, das konfiguriert ist zum Empfangen einer Darstellung des Stromnetzes (400) und Verbinden von Schutzeinheiten (408, 409, 410, 411, 412) im Stromnetz (400).

10. Schutzkonfigurationssystem nach einem der Ansprüche 6 bis 9, das konfiguriert ist zum Filtern der Netzelemente, die nicht mit einer Schutzeinheit verbunden sind.

11. Schutzkonfigurationssystem (201) nach einem der Ansprüche 6 bis 10, wobei das Schutzsystem ein verteiltes Sammelschienenschutzsystem umfasst.

12. Computerprogrammprodukt, das ein nicht transitorisches computerlesbares Speichermedium umfasst, wobei im nicht transitorischen computerlesbaren Speichermedium Computerprogrammcodes gespeichert sind, die Anweisungen umfassen, die durch mindestens einen Prozessor (301) ausführbar sind, und die Computerprogrammcodes konfiguriert sind, das Verfahren nach einem der Ansprüche 1 bis 5 auszuführen.

## Revendications

1. Procédé pour configurer un système de protection d'un réseau électrique (400), ledit procédé comprenant les étapes suivantes :
identifier des sections (401, 402, 403, 404, 405, 406, 407) dudit réseau électrique (400) sur la base de la topologie du réseau électrique, les sections comprenant une section primaire et une ou plusieurs sections secondaires, la section primaire comprenant une zone centrale à barre omnibus et les une ou plusieurs sections secondaires comprenant des zones de baies, chaque section secondaire étant en connexion avec la section primaire, où chaque section (401, 402, 403, 404, 405, 406, 407) comprend au moins une unité de protection (408, 409, 410, 411, 412) et un ou plusieurs éléments de réseau (401A, 402A-402D, 403A-403D, 404A-404D, 405A-405C, 406A-406D), l'unité de protection de la section primaire comprend au moins une unité de protection de barre omnibus, et les unités de protection de chaque section secondaire comprennent une ou plusieurs unités parmi une unité de protection de ligne, une unité de protection de distance et une unité de protection de transformateur ;
générer un ou plusieurs groupes (C1, C2, C3, C4, C5, C6, C7) desdits éléments de réseau (401A, 402A-402D, 403A-403D, 404A-404D, 405A-405C, 406A-406D) sur la base de paramètres de regroupement prédéfinis, les paramètres de regroupement prédéfinis étant basés sur une topologie du réseau électrique ; valider chacun desdits groupes (C1, C2, C3, C4, C5, C6, C7) sur la base de types d'éléments desdits éléments de réseau (401A, 402A-402D, 403A-403D, 404A-404D, 405A-405C, 406A-406D), de types de sections desdites sections (401, 402, 403, 404, 405, 406, 407), et d'un ou plusieurs paramètres de validation prédéfinis, les un ou plusieurs paramètres de validation prédéfinis comprennent une pluralité de règles pour la connexion desdits éléments de réseau (401A, 402A-402D, 403A-403D, 404A-404D, 405A-405C, 406A-406D) ; et
configurer dynamiquement chaque dite unité de protection (408, 409, 410, 411, 412) en utilisant des données de paramétrage desdits un ou plusieurs éléments de réseau (401A, 402A-402D, 403A-403D, 404A-404D, 405A-405C, 406A-406D) à partir desdits un ou plusieurs groupes (C1, C2, C3, C4, C5, C6, C7), les données de paramétrage comprenant un ou plusieurs paramètres associés à des connexions, à la communication et au fonctionnement desdits un ou plusieurs éléments de réseau (401A, 402A-402D, 403A-403D, 404A-404D, 405A-405C, 406A-406D) et une ou plusieurs unités de protection (408, 409, 410, 411, 412), où l'unité de protection à barre omnibus de la section primaire est affectée à un nombre correspondant d'unités de protection dans chaque section secondaire, et où les éléments de réseau correspondants dans chaque groupe sont affectés aux unités de protection respectives.

2. Procédé selon la revendication 1, comprenant en outre de générer une notification d'erreur (413) lorsque ladite validation desdits un ou plusieurs groupes (C1, C2, C3, C4, C5, C6, C7) échoue, où ladite notification d'erreur (413) comprend une indication pour la modification desdits un ou plusieurs éléments de réseau (401A, 402A-402D, 403A-403D, 404A-404D, 405A-405C, 406A-406D) dudit réseau électrique (400).

3. Procédé selon la revendication 1 ou la revendication 2, comprenant en outre de configurer la communication entre chaque dite unité de protection (408, 409, 410, 411, 412).

4. Procédé selon l'une quelconque des revendications 1 à 3, comprenant en outre de recevoir une représentation du réseau électrique (400) et de connecter des unités de protection (408, 409, 410, 411, 412) dans le réseau électrique (400).

5. Procédé selon l'une quelconque des revendications 1 à 4, comprenant en outre de filtrer les éléments du réseau qui ne sont pas connectés à l'une quelconque des unités de protection.

6. Système de configuration de protection (201) pour configurer un système de protection d'un réseau électrique (400), ledit système de configuration de protection (201) comprenant :
un support de stockage non transitoire lisible par ordinateur stockant des instructions de programme informatique définies par des modules dudit système de configuration de protection (201) ;
au moins un processeur (301) couplé de manière communicative audit support de stockage non transitoire lisible par ordinateur, ledit au moins un processeur (301) exécutant lesdites instructions de programme informatique définies ; et
lesdits modules dudit système de configuration de protection (201) comprenant :
un module d'identification de section (204) configuré pour identifier des sections (401, 402, 403, 404, 405, 406, 407) dudit réseau électrique (400) sur la base de la topologie du réseau électrique, les sections comprenant une section primaire et une ou plusieurs sections secondaires, la section primaire comprenant une zone centrale à barre omnibus et les une ou plusieurs sections secondaires comprenant des zones de baies, chaque section secondaire étant en connexion avec la section primaire, où chaque section (401, 402, 403, 404, 405, 406, 407) comprend au moins une unité de protection (408, 409, 410, 411, 412) et un ou plusieurs éléments de réseau (401A, 402A-402D, 403A-403D, 404A-404D, 405A-405C, 406A-406D), l'unité de protection de la section primaire comprend au moins une unité de protection à barre omnibus, et les unités de protection de chaque section secondaire comprennent une ou plusieurs unités parmi une unité de protection de ligne, une unité de protection de distance et une unité de protection de transformateur ;
un module de génération de groupes (205) configuré pour générer un ou plusieurs groupes (C1, C2, C3, C4, C5, C6, C7) desdits éléments de réseau (401A, 402A-402D, 403A-403D, 404A-404D, 405A-405C, 406A-406D) sur la base de paramètres de regroupement prédéfinis, les paramètres de regroupement prédéfinis étant basés sur une topologie du réseau électrique ;
un module de validation de groupe (205A) configuré pour valider chacun desdits groupes (C1, C2, C3, C4, C5, C6, C7) sur la base de types d'éléments desdits éléments de réseau (401A, 402A-402D, 403A-403D, 404A-404D, 405A-405C, 406A-406D), de types de sections desdites sections (401, 402, 403, 404, 405, 406, 407), et d'un ou plusieurs paramètres de validation prédéfinis, les un ou plusieurs paramètres de validation prédéfinis comprenant une pluralité de règles pour la connexion desdits éléments de réseau (401A, 402A-402D, 403A-403D, 404A-404D, 405A-405C, 406A-406D) ; et
un module de configuration de protection (207) configuré pour configurer dynamiquement chaque dite unité de protection (408, 409, 410, 411, 412) au moyen de données de paramétrage desdits un ou plusieurs éléments de réseau (401A, 402A-402D, 403A-403D, 404A-404D, 405A-405C, 406A-406D) provenant desdits un ou plusieurs groupes (C1, C2, C3, C4, C5, C6, C7), les données de paramétrage comprenant un ou plusieurs paramètres associés à des connexions, à la communication et au fonctionnement desdits un ou plusieurs éléments de réseau (401A, 402A-402D, 403A-403D, 404A-404D, 405A-405C, 406A-406D) et une ou plusieurs unités de protection (408, 409, 410, 411, 412), où l'unité de protection à barre omnibus de la section primaire est affectée à un nombre correspondant d'unités de protection dans chaque section secondaire, et où les éléments de réseau correspondants dans chaque groupe sont affectés aux unités de protection respectives.

7. Système de configuration de protection (201) selon la revendication 6, comprenant en outre un module de génération d'erreur (206) configuré pour générer une notification d'erreur (413) lorsque ladite validation desdits un ou plusieurs groupes (C1, C2, C3, C4, C5, C6, C7) échoue, où ladite notification d'erreur (413) comprend une indication pour la modification desdits un ou plusieurs éléments de réseau (401A, 402A-402D, 403A-403D, 404A-404D, 405A-405C, 406A-406D) dudit réseau électrique (400) .

8. Système de configuration de protection (201) selon la revendication 6 ou la revendication 7, dans lequel ledit module de configuration de protection (207) est en outre configuré pour configurer la communication entre chaque dite unité de protection (408, 409, 410, 411, 412).

9. Système de configuration de protection (201) selon l'une quelconque des revendications 6 à 8, étant configuré pour recevoir une représentation du réseau électrique (400) et connecter des unités de protection (408, 409, 410, 411, 412) dans le réseau électrique (400).

10. Système de configuration de protection selon l'une quelconque des revendications 6 à 9, étant configuré pour filtrer les éléments du réseau qui ne sont pas connectés à l'une quelconque des unités de protection.

11. Système de configuration de protection (201) selon l'une quelconque des revendications 6 à 10, dans lequel ledit système de protection comprend un système de protection à barre omnibus distribué.

12. Produit programme informatique comprenant un support de stockage non transitoire lisible par ordinateur, ledit support de stockage non transitoire lisible par ordinateur stockant des codes de programme informatique qui comprennent des instructions exécutables par au moins un processeur (301), lesdits codes de programme informatique étant configurés pour exécuter le procédé de l'une quelconque des revendications 1 à 5.
